# EUROPEAN PATENT SPECIFICATION

(11) **EP 0 703 817 B1**
(45) Date of publication and mention of the grant of the patent: **24.09.1997**
(21) Application number: 93913045.6
(22) Date of filing: 15.06.1993
(51) Int. Cl.: B01D 36/02, B01D 50/00, B04C 9/00

(54) **FILTER CONSTRUCTION**
FILTERKONSTRUKTION
STRUCTURE DE FILTRE

(43) Date of publication of application: 03.04.1996
(73) Proprietor: Kousa, Jukka, FIN-48100 Kotka (FI)
(72) Inventor: Kousa, Jukka, FIN-48100 Kotka (FI)
(74) Representative: Grünecker, Kinkeldey, Stockmair & Schwanhäusser Anwaltssozietät
(86) International application number: FI9300260
(87) International publication number: WO9428995

(56) References cited:
- DE-A- 243 873
- DE-B- 1 117 980
- GB-A- 737 457
- US-A- 3 541 764

## Description

The present invention concerns a filter construction as defined in the preamble to Claim 1.

Powdery and granular substances are mainly transported with the aid of a carrying gas, such as air, in various industrial branches. The mass is transported at comparatively high velocity, between 5 and 40 m/s, whereby the gas content of the mixture that is being moved can be kept fairly low and mass is transported with good efficiency. At the end of transportation the mass and the gas which transported it are separated, employing a filter structure in which the gas flows through the filter while the mass remains e.g. in a container under the filter, such as a storage silo.

Since one filter construction is required in conjunction with every intermediate storage container, small though it be, endeavors are to make the filters as small in size as possible and occupying a minimum of space. However, filtration takes place with greater efficiency the larger that area which the gas traverses without letting any mass pass through. For this reason, a great number of filtering elements closely adjacent to each other are used, such as fabrics, which are shaken time and again to clean them. Owing to the narrow gaps, however, the filters tend to become clogged, since in existing filter constructions the mass which is being transported, together with its transporting gas, discharges at the high transport velocity directly from the input duct into the vicinity of the filtering surfaces, and this causes powerful dusting and turbulence of the mass in the vicinity of the filtering surfaces and in the narrow spaces therebetween. Moreover, such turbulence frequently raises into the filter such mass which was already deposited in the storage container, thereby increasing the need of filter cleaning. Also as a result of powerful turbulence the storage containers fill up non-uniformly and therefore their full volumetric capacity cannot be utilized in every instance.

The object of the invention is to eliminate the drawbacks mentioned. Specifically, the object of the invention is to disclose a novel filter construction in which the mass flow can be made to go substantially straight from the input duct to the storage container so that it cannot clog the narrow-spaced structures of the filter.

Regarding the features which are essential for the invention, reference is made to claim 1.

Preferred features are as delineated in the dependent claims.

The filter construction of the invention for separating the mass being transported from the gas transporting it comprises an inlet passage, a gas exhaust passage and a filter placed in the gas flow between said passages, and a preseparation chamber having a flow cross section area substantially greater than that of the inlet passage, and into which the inlet passage opens. As taught by the invention, the filter and the preseparation chamber constitute an upright one-within-the-other structure presenting around a tubular preseparation chamber, a vertical annular filter, the inlet passage opening into said preseparation chamber in the region of the filter's upper part, and the mass and gas flowing downward in the preseparation chamber down to the level of the filter's initial, or lower, end, where they separate into a substantially downward directed mass flow and a gas flow directed upward and through the filter.

Since the preseparation chamber terminates close to the lower end of the filter, the mixture that has run down from the preseparation chamber becomes divided into two parts, the mass being transported continuing its downward course into the storage volume and the transporting gas turning upward to go out through the filter. In this way, the preseparation chamber and the filter constitute a one-in-the-other, compact construction which, consuming little space, is easy to place in any location where it has to be used. Advantageously, when the annular filter is encircling the preseparation chamber, i.e., when the two are concentric and symmetrical with reference to their common vertical central axis, the flows from the preseparation chamber will distribute uniformly over the entire areas of the filter's filtering surfaces. Likewise, one achieves in this instance uniform flow of the mass into the centre of the storage volume, whereby this volume can be filled to full capacity.

Advantageously, a preseparation cyclone is provided in the preseparation chamber, the inlet passage being connected thereto tangentially so that the mass and gas flow will rotate strongly owing to the powerful flow, and the centrifugal force thus produced will separate the mass and the gas. Thus, a large fraction of the mass will flow rather placidly through the cyclone into the storage container, while the gas moves through the filters and out of the system.

Various types of filter known in themselves from various connections can be used in the filter construction. There may for instance be several tubular filter cassettes, plate-like filter constructions, or gas-permeable surfaces disposed in some other way which inhibit the passage through them of powdery and granular masses.

Advantageously, the preseparation chamber extends in the centre of the filter to greater height than the filters, in which case the inlet passage communicates with the preseparation chamber above the filters. It is also conceivable that the preseparation chamber and the filters have the same height, in which case the inlet passage may pass through the upper part of the filters to the preseparation chamber. In this way the overall height of the filter construction can be minimized.

The advantage of the filter construction of the invention over the state of art is that the mass which is being transported does not raise dust nor is it turbulent, and it will not clog the filtering surfaces in such degree as is encountered in existing filter constructions, and therefore the construction of the invention operates more positively and more efficiently, having a greater life span and requiring less maintenance. With its aid is also prevented the ascent of mass from the storage silo back to the filter, and filling of the storage silo to full capacity is rendered possible. Furthermore, the construction of the invention enables an exceedingly small and compact filter to be built and which can be disposed in small and cramped spaces on top of the storage silos and equivalent, thus reducing the required height of any surrounding protective buildings.

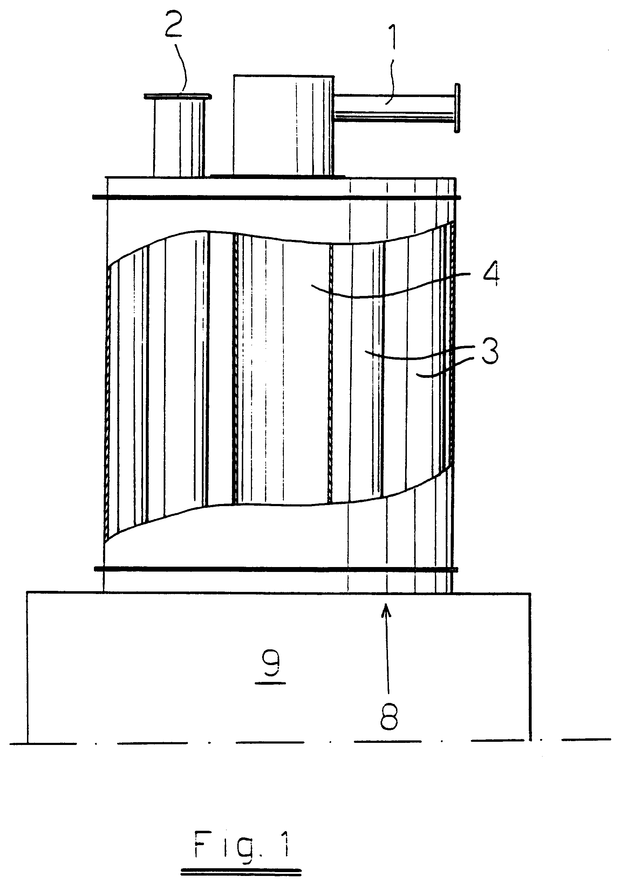

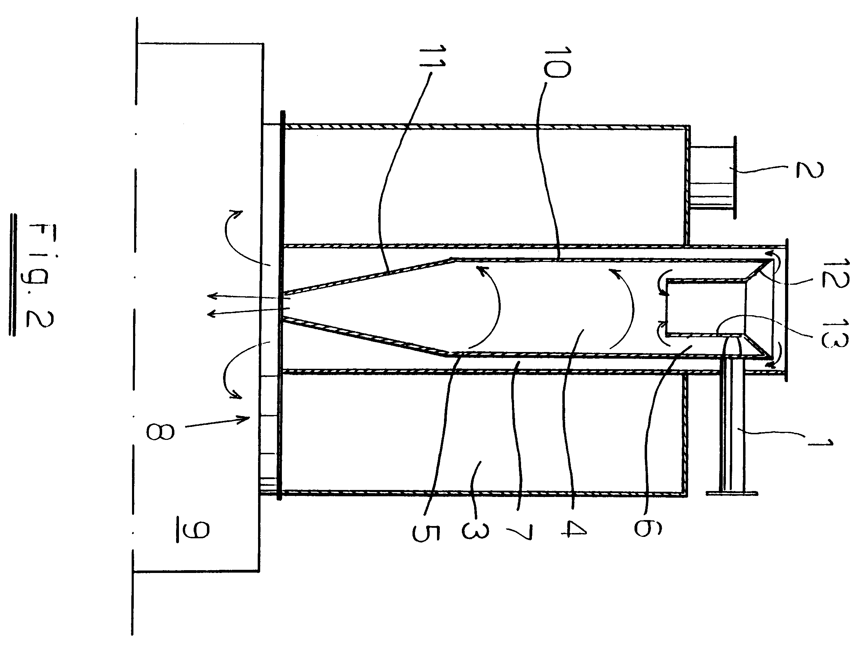

In the following the invention is described in detail with reference to the attached drawings, wherein Fig. 1 presents, partly sectioned, a filter construction according to the invention, and Fig. 2 presents, partly sectioned, another filter construction according to the invention.

In the embodiment depicted in Fig. 1 the filter construction is located above the container 9, into which one intends to transport mass. The filter construction comprises an inlet passage 1 terminating in the upper part of the filter construction, where it joins the vertical, tubular preseparation chamber 4, which has a flow cross section area substantially larger than that of the inlet passage 1.

Encircling the preseparation chamber 4, a space having annular cross section is provided, in which a plurality of tubular filter cassettes 3 have been disposed. These are open on their underside, that is at the initial end 8 of the filter, and they come together at the upper end of the filter construction to form the exhaust passage 2.

The filter construction of Fig. 1 operates as follows. A mixture of gas and mass to be transported is blown in through the inlet passage 1 at high velocity. Usually air is used to serve as transporting gas. The mixture is discharged into the preseparation chamber 4, and since the flow cross section of the preseparation chamber is substantially superior to that of the inlet passage, the flow velocity of the mixture is considerably reduced. Since the inlet passage opens substantially at right angles onto the upper end of the preseparation chamber 4, the flowing mixture will not discharge downward with high speed: after hitting the wall of the chamber, it becomes turbulent and comes to rest at the upper end of the chamber.

Hereby the mass which is being transported, and the air transporting it, running down in the preseparation chamber 4 mainly by effect of gravity, are pacified and move in a downward direction. At the bottom end of the preseparation chamber the mass, for the greater part, continues to travel in the same direction and runs into the container 9, while only part of the mass will go along with the air flow to the initial end 8 of the filter, and thence to the filters 3.

Since the filters 3 pass air exclusively, the air that has served as carrier gets out through the exhaust passage 2, while the mass which followed along is retained in the filters 3, from which it can be shaken down into the container 9 time and again by means of apparatus and procedures previously known in themselves, which are not more closely described in this context.

Fig. 2 shows another embodiment of the invention, this embodiment being otherwise like that of Fig. 1, except that to the preseparation chamber 4 a preseparation cyclone 5 has been added.

The preseparation cyclone 5 consists of a tubular construction of substantially equal height as the preseparation chamber 4 and having a cylindrical upper part 10 and a downward tapering, conical lower part 11. In addition, to the upper rim of the cylindrical upper part has been attached an inward extending guide cone 12 and an inner cylinder 13, the latter extending downward from the lower rim of the guide cone. Hereby, an intermediate space 6 is defined between the cylindrical upper part 10 and the inner cylinder 13, the inlet passage 1 opening tangentially into this space. Furthermore, a flow passage 7 is defined between the shell of the preseparation chamber 4 and the shell of the preseparation cyclone 5.

The filter construction of Fig. 2 operates as follows. As the mass/air mixture discharges from the inlet passage 1 with high velocity tangentially into the annular intermediate space, the mixture rotates in the intermediate space, beginning at the same time to descend under gravity effect. Owing to the centrifugal force, mass and air are substantially separated, i.e., the mass closer to the shell runs downward and the air, finding itself in the centre of the separation cyclone, is free to flow upward inside the inner cylinder 13. Thus while the mass runs freely and placidly down and through the conical lower part 11 into the container 9, the air which served as carrier fluid flows through the inner cylinder 13 and through the guide cone 12 and down along the flow passage 7, towards the initial end 8 of the filter. Here, the air flow can turn without obstruction into the filters 3, while the mass runs down into the container 9, through the centre of the air flow. Cross flows of mass and air flow are thus avoided at the lower end of the filter, which would occur if mass and air were to flow together downward in one cyclone.

In the foregoing the invention has been described by way of example with the aid of the attached drawings, while different embodiments of the invention are feasible within the scope of the claims.

## Claims

1. A filter construction for separating mass which is being transported from the gas transporting it, said filter construction comprising
- an inlet passage (1),
- a gas exhaust passage (2) and
- a filter (3) placed in the gas flow between said passages, and
- a preseparation chamber (4) having a flow cross section substantially superior to that of the inlet passage and into which the inlet passage opens,
**characterized** in that the filter (3) and the preseparation chamber (4) in combination constitute an upright, one-inside-the-other structure in which around the tubular preseparation chamber there is an upright annular filter, whose underside (8) is open and whose upper end is in communication with the exhaust passage, the inlet passage (1) opening in the region of the filter's upper part into the preseparation chamber, wherein the preseparation chamber terminates and opens close to the lower end (8) of the filter, such that the mass and the gas can flow in the preseparation chamber downwardly to the level of the filter's initial, or lower, end (8), to disperse there to a substantially downwardly directed mass flow and a gas flow which can be directed upwardly through the filter.

2. Filter construction according to claim 1, **characterized** in that the inlet passage (1) joins the upper end of the preseparation chamber (4) above the filter (3).

3. Filter construction according to claim 1, **characterized** in that the inlet passage (1) joins the preseparation chamber (4) in the upper part of the filter (3), passing through the space defined by the filter.

4. Filter construction according to any one of claims 1-3, **characterized** in that the preseparation chamber(4) comprises a preseparation cyclone (5) into which the inlet passage (1) opens tangentially.

5. Filter construction according to claim 4, **characterized** in that the preseparation cyclone (5) comprises an annular intermediate space (6) into which the inlet passage (1) opens, such that the mass can flow downward and the gas can flow through said intermediate space without interfering with the mass flow.

6. Filter construction according to claim 5, **characterized** in that the preseparation chamber (4) comprises outside the preseparation cyclone (5) a flow passage (7) along which the pre-purified gas can flow down to the initial end (8) of the filter.

7. Filter construction according to any one of claims 1-6, **characterized** in that the filter (3) is constituted by a unitary filter shell.

8. Filter construction according to any one of claims 1-6, **characterized** in that the filter (3) consists of a plurality of separate and side-by-side filter cartridges.

## Patentansprüche

1. Filterkonstruktion zum Trennen von Masse, die transportiert wird, von dem sie transportierenden Gas, wobei die Filterkonstruktion umfaßt:
- einen Einlaßkanal (1),
- einen Gasaustrittskanal (2) und
- einen Filter (3), der in dem Gasstrom zwischen den Kanälen angeordnet ist, und
- eine Vortrennkammer (4) mit einem Strömungsquerschnitt, der wesentlich größer ist als der des Einlaßkanals, und in die hinein sich der Einlaßkanal öffnet,
**dadurch gekennzeichnet**, daß der Filter (3) und die Vortrennkammer (4) zusammen eine aufrechtstehende, ineinander verschachtelte Struktur bilden, in der um die röhrenförmige Vortrennkammer herum ein aufrechtstehender ringförmiger Filter vorhanden ist, dessen Unterseite (8) offen ist und dessen oberes Ende mit dem Austrittskanal in Verbindung steht, wobei sich der Einlaßkanal (1) im Bereich des oberen Teils des Filters in die Vortrennkammer öffnet, wobei die Vortrennkammer in der Nähe des unteren Endes (8) des Filters endet und sich dort öffnet, so daß die Masse und das Gas in der Vortrennkammer auf die Höhe des Ausgangs- bzw. Unterendes (8) des Filters nach unten strömen können, um sich dort in einen im wesentlichen nach unten gerichteten Massestrom und einen Gasstrom zu teilen, der durch den Filter nach oben geleitet werden kann.

2. Filterkonstruktion nach Anspruch 1, **dadurch gekennzeichnet**, daß der Einlaßkanal (1) oberhalb des Filters (3) in das obere Ende der Vortrennkammer (4) übergeht.

3. Filterkonstruktion nach Anspruch 1, **dadurch gekennzeichnet**, daß der Einlaßkanal (1) im oberen Teil des Filters (3) in die Vortrennkammer (4) übergeht und durch den durch den Filter begrenzten Raum verläuft.

4. Filterkonstruktion nach einem der Ansprüche 1-3, **dadurch gekennzeichnet**, daß die Vortrennkammer (4) einen Vortrennzyklon (5) umfaßt, in den hinein sich der Einlaßkanal (1) tangential öffnet.

5. Filterkonstruktion nach Anspruch 4, **dadurch gekennzeichnet**, daß der Vortrennzyklon (5) einen ringförmigen Zwischenraum (6) umfaßt, in den hinein sich der Einlaßkanal (1) öffnet, so daß die Masse nach unten strömen kann und das Gas durch den Zwischenraum strömen kann, ohne mit dem Massestrom in Kontakt zu kommen.

6. Filterkonstruktion nach Anspruch 5, **dadurch gekennzeichnet**, daß die Vortrennkammer (4) außerhalb des Vortrennzyklons (5) einen Strömungskanal (7) umfaßt, in dem das vorgereinigte Gas zum Ausgangsende (8) des Filters nach unten strömen kann.

7. Filterkonstruktion nach einem der Ansprüche 1-6, **dadurch gekennzeichnet**, daß der Filter (3) durch eine aus einem Stück bestehende Filterhülse gebildet wird.

8. Filterkonstruktion nach einem der Ansprüche 1-6, **dadurch gekennzeichnet**, daß der Filter (3) aus einer Vielzahl separater und nebeneinander angeordneter Filtereinsätze besteht.

## Revendications

1. Structure de filtre pour la séparation d'une masse qui est transportée du gaz qui la transporte, ladite structure de filtre comprenant
- un passage d'entrée (1),
- un passage d'échappement de gaz (2), et
- un filtre (3) placé dans le flux de gaz, entre lesdits passages, et
- une chambre de préséparation (4) présentant une section de flux sensiblement supérieure à celle du passage d'entrée et dans laquelle donne le passage d'entrée,
caractérisée par le fait que le filtre (3) et la chambre de préséparation (4) constituent, en combinaison, une structure verticale l'une à l'intérieure de l'autre dans laquelle se trouve, autour de la chambre de préséparation tubulaire, un filtre annulaire vertical dont le côté inférieur (8) est ouvert et dont l'extrémité supérieure est en communication avec le passage d'échappement, le passage d'entrée (1) donnant, dans la zone de la partie supérieure du filtre, dans la chambre de préséparation, où la chambre de préséparation se termine et s'ouvre près de l'extrémité inférieure (8) du filtre, de sorte que la masse et le gaz puissent circuler vers le bas dans la chambre de préséparation, vers le niveau de l'extrémité initiale, ou inférieure, (8) du filtre, pour s'y disperser en un flux de masse sensiblement dirigé vers le bas et un flux de gaz qui peut être dirigé vers le haut à travers le filtre.

2. Structure de filtre suivant la revendication 1, caractérisée par le fait que le passage d'entrée (1) rejoint l'extrémité supérieure de la chambre de préséparation (4) au-dessus du filtre (3).

3. Structure de filtre suivant la revendication 1, caractérisée par le fait que le passage d'entrée (1) rejoint la chambre de préséparation (4) dans la partie supérieure du filtre (3), en passant à travers l'espace défini par le filtre.

4. Structure de filtre suivant l'une quelconque des revendications 1 à 3, caractérisée par le fait que la chambre de préséparation (4) comprend un cyclone de préséparation (5) dans lequel donne tangentiellement le passage d'entrée (1).

5. Structure de filtre suivant la revendication 4, caractérisée par le fait que le cyclone de préséparation (5) comprend un espace intermédiaire annulaire (6) dans lequel donne le passage d'entrée (1), de sorte que la masse puisse circuler vers le bas et que le gaz puisse circuler à travers ledit espace intermédiaire sans interférer avec le flux de la masse.

6. Structure de filtre suivant la revendication 5, caractérisée par le fait que la chambre de préséparation (4) comprend, à l'extérieur du cyclone de préséparation (5), un passage de circulation (7) le long duquel le gaz prépurifié peut circuler vers le bas, vers l'extrémité initiale (8) du filtre.

7. Structure de filtre suivant l'une quelconque des revendications 1 à 6, caractérisée par le fait que le filtre (3) est constitué par une coquille filtrante unitaire.

8. Structure de filtre suivant l'une quelconque des revendications 1 à 6, caractérisée par le fait que le filtre (3) consiste en une pluralité de cartouches filtrantes séparées placées côte à côte.
